# FASCICULE DE BREVET EUROPEEN

(11) **EP 2 499 418 B1**
(45) Date de publication et mention de la délivrance du brevet: **03.12.2014**
(21) Numéro de dépôt: 10773926.0
(22) Date de dépôt: 10.11.2010
(51) Int. Cl.: F17C 11/00

(54) **RESERVOIR DE STOCKAGE D'HYDROGENE A HYDRURES METALLIQUES**
WASSERSTOFFSPEICHERTANK MIT METALLHYDRIDEN
HYDROGEN STORAGE TANK HAVING METAL HYDRIDES

(30) Priorité: 13.11.2009 FR 0958022
(43) Date de publication de la demande: 19.09.2012
(73) Titulaire: Commissariat à l'Énergie Atomique et aux Énergies Alternatives, 75015 Paris (FR)
(72) Inventeur: CHAISE, Albin, F-38000 Grenoble (FR); ELIE, Manon, F-38100 Grenoble (FR); GILLIA, Olivier, F-38360 Sassenage (FR); PLANQUE, Michel, F-38180 Seyssins (FR)
(74) Mandataire: Ilgart, Jean-Christophe
(86) Numéro de dépôt international: PCT/EP2010/067187
(87) Numéro de publication internationale: WO 2011/058044

(56) Documents cités:
- WO-A1-2009/138406
- JP-A- 59 050 300
- JP-A- 60 026 897
- JP-A- 61 244 997
- US-A- 4 402 915
- US-A- 4 723 595
- US-A1- 2005 188 847
- US-A1- 2005 211 573

## Description

### DOMAINE TECHNIQUE ET ART ANTÉRIEUR

La présente invention se rapporte à un réservoir de stockage d'hydrogène sous la forme d'hydrures métalliques.

On cherche des énergies alternatives aux pétroles du fait, notamment, de la réduction des réserves de pétrole. Un des vecteurs prometteurs des énergies alternatives est l'hydrogène qui peut être utilisé dans les piles à combustible pour produire de l'électricité.

L'hydrogène est disponible en abondante quantité, il peut être produit à partir du charbon, du gaz naturel ou d'autres hydrocarbures, mais aussi par simple électrolyse de l'eau en utilisant par exemple l'électricité produite par l'énergie solaire ou éolienne.

Les piles à hydrogène sont déjà utilisées dans certaines applications, par exemple dans des véhicules automobiles mais sont encore peu répandues, notamment du fait des précautions à prendre et des difficultés pour le stockage de l'hydrogène.

L'hydrogène peut être stocké sous forme d'hydrogène comprimé entre 350 et 700 bars, ce qui pose des problèmes de sécurité. Il faut alors prévoir des réservoirs aptes à tenir ces pressions, sachant par ailleurs que ces réservoirs, lorsqu'ils sont montés dans des véhicules, peuvent être soumis à des chocs.

Il peut être stocké sous forme liquide, cependant ce stockage n'assure qu'un faible rendement et ne permet pas le stockage sur de longues durées. Le passage d'un volume d'hydrogène de l'état liquide à l'état gazeux dans les conditions normales de pression et de température produit un accroissement de son volume d'un facteur d'environ 800. Les réservoirs d'hydrogène sous forme liquide ne sont en général pas très résistants aux chocs mécaniques, cela pose d'importants problèmes de sécurité.

Il existe également le stockage d'hydrogène dit « solide » sous la forme d'hydrure. Ce stockage autorise une densité volumique de stockage importante et met en oeuvre une pression modérée d'hydrogène tout en minimisant l'impact énergétique du stockage sur le rendement global de la chaine hydrogène, i.e. de sa production à sa conversion en une autre énergie.

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption. L'hydrure formé peut à nouveau donner de l'hydrogène gazeux et un métal. Cette réaction est appelée désorption. L'absorption ou la désorption interviennent en fonction de la pression partielle d'hydrogène et la température.

L'absorption et la désorption de l'hydrogène sur une poudre ou une matrice métallique M se font selon la réaction suivante : 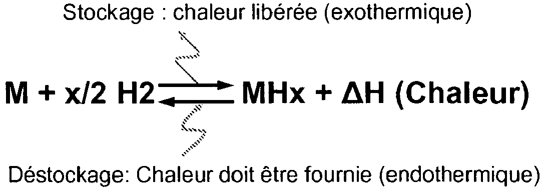
- M étant la poudre ou matrice métallique,
- MHx étant l'hydrure métallique.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

On cherche notamment à avoir un chargement rapide de la poudre métallique en hydrogène. Pour obtenir un tel chargement rapide, il faut évacuer la chaleur produite lors de ce chargement pour éviter de freiner l'absorption de l'hydrogène sur la poudre ou la matrice métallique. Lors du déchargement en hydrogène, de la chaleur est apportée. Par conséquent, l'efficacité du refroidissement et du réchauffement conditionne les débits de chargement et de déchargement.

De façon quasi-systématique, l'hydrure et le métal, qui se présentent tous deux sous forme de poudre dans les réservoirs, ont une différence de densité comprise entre 10 % à 30 %.

Cette variation de densité au sein du réservoir a deux conséquences :
- d'une part l'apparition de contraintes à l'intérieur des grains de poudre lors des cycles d'absorption-désorption, ce qui provoque leur fractionnement en plus petits grains. Ce phénomène est appelé décrépitation.
- d'autre part le gonflement des grains de poudre au cours de l'absorption d'hydrogène et le dégonflement des grains lors de la désorption. Un volume libre au-dessus de la poudre est alors prévu pour tenir compte de se gonflement.

Le phénomène de décrépitation et le phénomène de gonflement sont responsables d'une densification progressive du lit de poudre à mesure que le nombre de cycles d'absorption-désorption croît. En effet, la décrépitation fait apparaître des poudres de plus en plus fines qui migrent par gravité vers le fond du réservoir à travers le réseau de grains. De plus, lorsque la vitesse du flux d'hydrogène est suffisamment importante, les grains sont déplacés et réarrangés dans le réservoir. Par ailleurs, le lit de poudre tend à se rétracter, i.e. à voir son volume diminuer lors d'une désorption ce qui laisse un espace vide entre les parois du réservoir et le lit du matériau de stockage de l'hydrogène. Une migration des poudres intervient par gravité via cet espace et le comble. Lors de l'absorption suivante, la poudre d'hydrure formée ne va pas se comporter comme un fluide. En particulier, le niveau du lit de poudre dans le réservoir n'est pas celui atteint lors de l'absorption précédente. En effet les frottements des grains entre eux et contre la paroi du réservoir empêchent le lit de poudre de se dilater librement. Le gonflement des grains de poudre est alors compensé par la réduction de la taille des porosités. Le lit de matériau de stockage de l'hydrogène/d'hydrure se densifie ainsi progressivement au cours des cycles d'hydruration.

On appelle « cycle d'hydruration », une phase d'absorption suivie d'une phase de désorption.

Le lit de poudre étant de moins en moins poreux, les contraintes nécessaires pour réduire encore la porosité augmentent à chaque hydruration, le gonflement des grains induit donc des contraintes croissantes sur les parois du réservoir. Après un certain nombre de cycles les contraintes sont telles que les parois du réservoir peuvent subir des déformations plastiques et se rompre.

Le document US 2005/0211573 décrit un réservoir de stockage d'hydrogène sous forme d'hydrure de forme cylindrique et comportant des compartiments en forme de secteurs angulaires répartis autour de l'axe du réservoir. Les compartiments comportent des cellules radiales dans lesquelles est disposé le matériau de stockage de l'hydrogène. Cette architecture provoque l'apparition de contraintes dues à la densification du matériau de stockage de l'hydrogène/de l'hydrure sur l'enceinte extérieur. Au cours des cycles d'hydruration, ces contraintes augmentent. Au-delà d'un certain nombre de cycles, les contraintes peuvent provoquer la rupture du réservoir. Ce réservoir doit donc faire l'objet d'une surveillance accrue.

Le document US 2005/0211573 décrit un réservoir cylindrique comportant des tubes parallèles à l'axe du réservoir chargés en matériau de stockage de l'hydrogène, les tubes baignant dans le fluide caloporteur. Cette architecture n'est pas performante pour supporter les phénomènes de dilatation du matériau de stockage de l'hydrogène lors des cycles d'absorption - désorption. En effet, sous l'effet de vibration ou de mouvement du réservoir, le matériau de stockage de l'hydrogène risque de s'accumuler à une extrémité des tubes et de remplir complètement une portion du tube, i.e. d'être en contact avec toute la surface intérieure du tube. Lors du gonflement du matériau de stockage de l'hydrogène dans ces portions de tube, des contraintes très importantes sont induites sur la paroi des tubes pouvant provoquer leur rupture.

Par ailleurs, ce réservoir présente une faible densité volumique de stockage puisqu'il est nécessaire de laisser un espace important inoccupé par le matériau de stockage de l'hydrogène. En effet, ce type de réservoir tubulaire horizontal ne doit être rempli que partiellement de poudre au plus 60% et de préférence à 40% du volume interne de l'échangeur, afin d'éviter des efforts trop importants sur les parois du réservoir à cause du gonflement des grains d'hydrure.

Le document US 2004/0129048 décrit un réservoir d'hydrogène dans lequel l'hydrogène est stocké sous la forme d'hydrure métallique. Ce réservoir de forme cylindrique comporte des cellules allongées remplies de poudre. Des tubes de circulation d'eau sont prévus dans certains canaux pour évacuer la chaleur.

D'une part ce dispositif n'assure pas une répartition homogène de la poudre dans tout le réservoir, ce qui peut provoquer l'application de contraintes dommageables à la structure. D'autre part, les échanges thermiques ne sont pas optimaux. De plus, la structure de canaux est complexe à réaliser, et le remplissage en poudre est fastidieux.

C'est par conséquent un but de la présente invention d'offrir un réservoir de stockage d'hydrogène offrant une très bonne tenue aux contraintes dues à la densification du matériau de stockage de l'hydrogène, tout en offrant une densité volumique de stockage satisfaisante.

### EXPOSÉ DE L'INVENTION

Les buts précédemment énoncés sont atteints par un réservoir d'hydrogène d'axe longitudinal comportant une enceinte extérieure de confinement et une structure intérieure de répartition de l'hydrure métallique, ladite structure comportant une pluralité d'étages superposés, chaque étage comportant une pluralité de compartiments s'étendant dans la direction de l'axe longitudinal, les canaux comportant un fond et deux parois latérales et deux parois transversales, les parois latérales forment un angle strictement supérieure à 90° avec le fond.

En d'autres termes, le compartiment selon la présente invention présente une forme évasée, les compartiments étant disposés dé sorte que les parois latérales s'évasent vers le haut, le matériau se trouvant dans le fond du compartiment, qui applique les contraintes les plus fortes, peut se déplacer plus facilement vers le haut, les contraintes appliquées par la poudre dans la partie inférieure des compartiments sont alors réduites.

Au niveau du raccord entre les canaux, les tangentes aux parois latérales sont avantageusement sécantes ce qui permet d'augmenter le volume des canaux par rapport à celui de l'espace inter-canaux.

Avantageusement, les compartiments ont une forme hémicylindrique.

De préférence, le matériau des parois latérales et du fon est en matériau non poreux.

Dans un autre exemple, les compartiments comportent un fond plat et des parois latérales s'écartant l'une de l'autre pour définir une forme évasée. Cette forme permettant d'augmenter la densité volumique de matériau de stockage de l'hydrogène.

La présente invention a alors pour objet un réservoir de stockage de l'hydrogène par absorption dans un matériau de stockage de l'hydrogène, ledit réservoir ayant un axe longitudinal et comportant une enceinte et une structure interne disposée dans l'enceinte, la structure interne comportant une pluralité d'étages et un système d'échange thermique au sein de la structure interne, chaque étage comportant une pluralité de compartiments répartis en une pluralité de rangées orientées selon la direction longitudinale, chaque compartiment comportant un fond, deux parois latérales, deux parois transversales et une ouverture, le fond étant destiné à être disposé en dessous de l'ouverture, deux compartiments adjacents d'une même rangée ayant une cloison transversale en commun, deux compartiments de deux rangées adjacentes étant solidarisés par leurs parois latérales, des plaques étant disposées entre deux étage successifs, formant pour l'étage supérieur un support et pour l'étage inférieur un couvercle, lesdites plaques étant destinées à être sensiblement horizontales, l'ouverture de chaque compartiment présentant une dimension transversale supérieure à celle du fond dudit compartiment et l'angle formé entre chacune des parois latérales et le fond étant strictement supérieur à 90°, chaque compartiment contenant un matériau de stockage de l'hydrogène.

De préférence, le matériau de stockage d'hydrogène a été introduit par l'ouverture lors du montage du réservoir.

De préférence, le matériau des parois latérales et du fond est en matériau non poreux.

Selon un exemple de réalisation, les volumes définis entre deux parois latérales de deux rangées de compartiments adjacentes et la plaque formant support forment des conduits d'écoulement d'un caloporteur.

Selon un autre exemple de réalisation, le caloporteur s'écoule directement dans les conduits entrant en contact aves les parois latérales.

Avantageusement, chaque compartiment a une forme hémicylindrique, le cylindre dont est issu le compartiment ayant une section circulaire.

Les compartiments peuvent également comporter un fond plat et des parois latérales concaves ou planes.

Les parois latérales peuvent être sécantes avec le plan de la plaque formant couvercle.

Dans un exemple de réalisation, les parois latérales des compartiments d'une rangée sont réalisées d'un seul tenant.

Le réservoir selon la présente invention peut comporter des sous-ensembles formés d'une pluralité de compartiments d'un étage, lesdits compartiments étant solidaires de la plaque formant support, lesdits sous-ensembles étant empilés pour former la structure interne. Chaque conduit peut alors être raccordé de manière étanche au circuit de caloporteur.

Dans une variante de réalisation, le réservoir selon la présente invention peut comporter des sous-ensembles formés d'une pluralité de compartiment d'un étage, lesdits compartiments étant solidaires de la plaque formant couvercle, lesdits sous-ensembles étant empilés pour former la structure interne. Le couvercle peut fermer de manière étanche les compartiments, la structure interne étant disposée dans un bain de caloporteur.

Les parois transversales comportent avantageusement au moins un orifice pour permettre le passage de l'hydrogène d'un compartiment à l'autre d'une même rangée.

Dans une variante, un tube poreux traverse les compartiments d'une même rangée pour alimenter lesdits compartiments en hydrogène. Avantageusement, le tube est au fond des compartiments et sensiblement dans leur plan de symétrie.

Les compartiments sont, par de manière préférée, réalisés en un matériau offrant un bon coefficient d'échange thermique, tel que l'aluminium ou le cuivre.

La présente invention a également pour objet un procédé de réalisation d'un réservoir selon la présente invention, comportant les étapes :
a) de réalisation de canaux ayant une section transversale identique à celles des compartiments,
b) de fixation des cloisons transversales (18) dans les canaux délimitant les compartiments,
c) de solidarisation d'une plaque auxdits canaux,
d) de mise en place du matériau de stockage de l'hydrogène individuellement dans chaque compartiment,
e) de répétition des étapes a), b) etc.) jusqu'à obtention du nombre de sous-ensembles requis,
f) d'empilement desdits sous-ensembles,
g) de mise en place de l'empilement dans une enceinte,
h) d'alimentation en hydrogène.

Les canaux sont par exemple réalisés par pliage d'une tôle

Dans un exemple de réalisation, l'étape c) a lieu avant l'étape b) et dans lequel la plaque obture de manière étanche les canaux, formant couvercle. L'empilement peut alors être disposé dans un bain de caloporteur

Dans un autre exemple de réalisation, lors de l'étape b), la plaque est solidarisée aux fonds des canaux, formant le couvercle de l'étage inférieur. Les conduits qui sont délimités entre les canaux et le couvercle de l'étage inférieur peuvent être connectés de manière étanche au système d'échange thermique.

### BRÈVE DESCRIPTION DES DESSINS

La présente invention sera mieux comprise à l'aide de la description qui va suivre et des dessins en annexes sur lesquels :
- la figure 1 est une vue en perspective partielle d'un exemple de réalisation d'un réservoir selon la présente invention et sur laquelle la structure interne d'un réservoir selon la présente invention est visible,
- la figure 2 est une vue en perspective d'un étage isolé de la structure de la figure 1,
- la figure 3A est une vue en perspective d'une partie de l'étage de la figure 2,
- la figure 3B est une vue en perspective d'un compartiment seul de la figure 3A,
- la figure 4 est une vue en coupe transversale de la figure 3,
- la figure 5 est une vue en coupe longitudinale d'un autre exemple de réalisation des étages de la structure interne du réservoir,
- les figures 6A et 6B sont des vues en coupe transversales d'autres exemples de réalisation de compartiments selon la présente invention,
- les figures 7A et 7B sont des représentations schématiques respectivement des contraintes exercées par le matériau de stockage d'hydrogène sur les parois latérales de compartiment selon la présente invention et d'un compartiment de l'état de la technique respectivement.

### EXPOSÉ DÉTAILLÉ DE MODES DE RÉALISATION PARTICULIERS

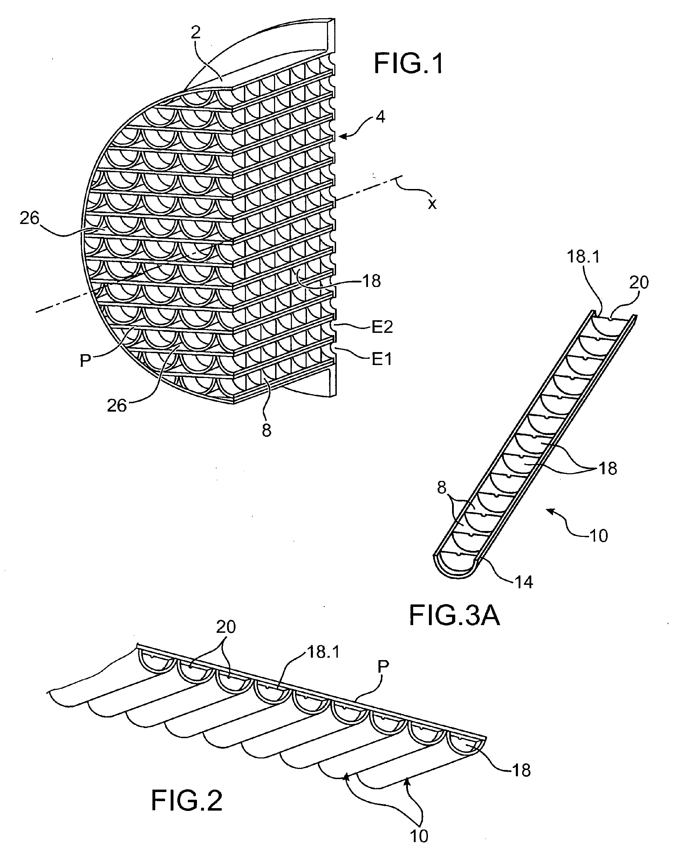

Sur la figure 1, on peut voir un exemple de réalisation d'un réservoir d'hydrogène selon la présente invention.

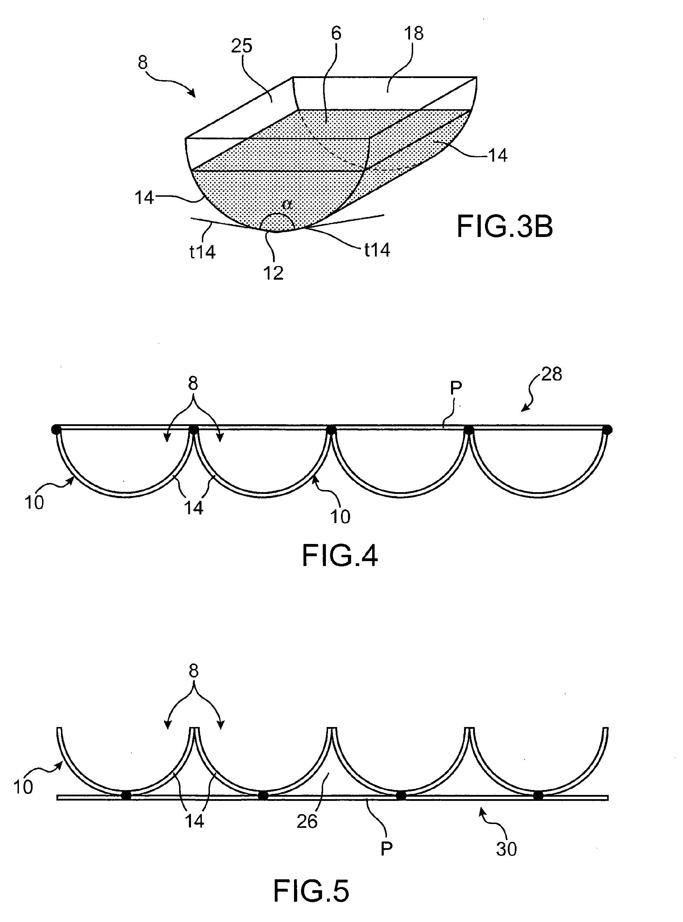

Le réservoir comporte une enceinte extérieure 2 apte à tenir la pression d'hydrogène, et une structure interne 4 de réception d'un matériau de stockage d'hydrogène 6 représenté sur la figure 5.

L'enceinte extérieure 2 a, dans l'exemple, représenté, la forme d'un cylindre à section circulaire d'axe longitudinal X. Cette forme est avantageuse pour la tenue à la pression, mais n'est en aucun cas limitative, l'enceinte extérieure 2 pourrait par exemple avoir une section torique ou carrée.

Le réservoir est destiné à être disposé sensiblement horizontalement en fonctionnement. Par conséquent, l'axe X est destiné à être à l'horizontal ou sensiblement à l'horizontal.

Dans la présente demande, on qualifie de « supérieur » et « inférieur » les éléments ou parties d'élément destinés à avoir une position haute ou basse dans la représentation du réservoir de la figure 1, mais ceci n'est en aucun cas limitatif.

L'enceinte extérieure 2 est par exemple en acier inox, en aluminium ou en matériau composite tissée. Le niveau de pression auquel peut être soumise l'enceinte est compris entre 0 et 200 bars.

En général, le réservoir est raccordé à un circuit de circulation d'hydrogène connecté à une ou aux deux extrémités longitudinales de l'enceinte pour charger le réservoir en hydrogène et décharger le réservoir de l'hydrogène. En outre, un système d'échange thermique qui sera décrit par la suite assure la circulation d'une extrémité longitudinale à l'autre d'un caloporteur. Le réservoir est donc soumis généralement à des flux d'hydrogène et de caloporteur orientés longitudinalement.

Le réservoir, et plus particulièrement la structure interne présentent alors avantageusement une architecture adaptée aux flux longitudinaux. Mais la présente invention peut être adaptée à des flux ayant une autre orientation.

La structure interne 4 comporte une pluralité d'étages superposés E1, E2,... En, n étant un entier naturel.

Chaque étage E1, E2,... En comporte une pluralité de compartiments 8 répartis en rangées parallèles, contenant chacun le matériau de stockage de l'hydrogène 6. La distribution des compartiments est avantageuse du fait de la direction longitudinale des flux d'hydrogène et de caloporteur.

Les compartiments 8 sont avantageusement réalisés à partir de canaux 10 d'axes longitudinaux parallèles à l'axe longitudinal X de l'enceinte. Les canaux sont adjacents et sont solidaires par leurs parois latérales. Ceux-ci sont particulièrement visibles sur les figures 2 et 3A.

Les canaux comportent un fond 12, deux parois latérales 14 et un couvercle.

Dans l'exemple représenté, les canaux ont la forme de demi-tubes coupés selon un plan passant par leur axe. Dans cet exemple de réalisation, le fond se confond avec les parois latérales.

Sur la figure 3B sur laquelle un seul compartiment 8 est représenté, chaque paroi latérale 14 forme avec le fond 12 un angle α strictement supérieur à 90° de sorte que les compartiments 8 aient une forme évasée, facilitant le déplacement de la poudre du matériau de stockage de l'hydrogène lors de son gonflement. Plus précisément, dans l'exemple représenté, ce sont les tangentes t₁₄ aux parois 14 qui forment un angle strictement supérieur à 90° avec le fond 12.

Les canaux 10 se raccordent les uns aux autres au niveau de leurs parois latérales.

Avantageusement les tangentes des parois latérales 14 adjacentes sont sécantes, ce qui permet d'augmenter le volume des canaux par rapport au volume de l'espace entre les canaux, qui sera décrit plus loin, et donc d'augmenter la densité volumique du réservoir en matériau de stockage de l'hydrogène. Dans l'exemple où les canaux ont la forme de demi-tubes coupés selon un plan passant par leur axe, les tangentes aux parois latérales sont quasiment orthogonales au fond.

Des compartiments 8 sont délimités dans les canaux par des cloisons transversales 18 fixées dans les canaux. Ces cloisons 18 empêchent le matériau de stockage de l'hydrogène de se déplacer longitudinalement et de s'accumuler à une extrémité des canaux. Avantageusement, les cloisons transversales 18 sont réparties de manière régulière pour délimiter des compartiments de tailles sensiblement identiques. Dans cet exemple de réalisation, les cloisons transversales 18 ont la forme de demi-disque.

Le réservoir comporte des moyens pour alimenter les compartiments en hydrogène et collectés celui-ci. Par exemple, les parois transversales 18 peuvent comporter au moins un trou 20 traversant pour permettre à l'hydrogène de circuler d'un compartiment au compartiment suivant d'un canal, permettant de charger le matériau de stockage de l'hydrogène en hydrogène et de collecter l'hydrogène libéré lors de la désorption. De préférence, ce trou présente une faible section pour limiter le passage de matériau de stockage de l'hydrogène d'un compartiment à l'autre. Avantageusement, ce trou est situé dans la partie supérieure des cloisons, réduisant encore les risques de circulation de matériau de stockage de l'hydrogène. Dans l'exemple représenté, il s'agit d'une entaille 20 au niveau de l'extrémité libre 18.1 des cloisons 18. Un volume libre 25 est prévu au dessus du matériau de stockage de l'hydrogène pour compenser le gonflement du matériau de stockage de l'hydrogène, ce volume libre 25 permet à l'hydrogène de circuler d'un compartiment 8 à l'autre.

Un jeu entre le couvercle et le haut des parois transversales peut assurer également l'alimentation et la collecte de l'hydrogène.

En variante, on peut également prévoir de disposer un tube d'alimentation en hydrogène (non représenté) courant dans les compartiments 8 d'un même canal. Ce tube est par exemple poreux.

Le tube poreux assure une distribution d'hydrogène dans chaque compartiment d'un même canal à une pression homogène.

De manière avantageuse, le tube situé dans la partie basse du canal et /ou dans le plan de symétrie dudit canal, ce qui ne gêne pas le gonflement de la poudre lors des phases d'absorption.

Dans le cas où des tubes d'alimentation sont mis en oeuvre, on peut prévoir de rendre solidaires les cloisons transversales 18 et le tube et de mettre en place l'ensemble ainsi formé dans le canal, ce qui simplifie la réalisation des compartiments. On peut également rendre les cloisons 18 solidaires d'une tige longitudinale permettant une mise en place aisée et rapide des cloisons.

Les compartiments sont fermés par un couvercle. Avantageusement, il s'agit d'un couvercle commun à tous les compartiments d'un même étage se présentant sous la forme d'une plaque.

Ainsi vue en coupe transversale, la structure interne comporte des plaques P formant couvercle pour les compartiments de l'étage inférieur et formant un support pour les compartiments de l'étage supérieur.

Des conduits longitudinaux 26 sont ménagés entre les plaques P et les faces extérieures des canaux 10. Dans l'exemple représenté, ces conduits 26 ont une section transversale ayant sensiblement une forme de triangle isocèle dont les deux côtés de même longueur sont concaves.

La structure de l'invention isole les étages des uns des autres empêchant le matériau de stockage de l'hydrogène 6 qui se trouve sous forme de poudre de tomber par gravité vers un étage inférieur et de s'accumuler dans la partie inférieure du réservoir. Les cloisons 18 limitent les déplacements longitudinaux et les parois latérales 14 limitent les déplacements transversaux. Grâce à l'invention, on maintient la répartition du matériau de stockage de l'hydrogène dans le réservoir établie lors de l'assemblage du réservoir, cette répartition est homogène et assure une tenue aux contraintes dues à la densification.

Le réservoir comporte également un échangeur thermique destiné à extraire la chaleur des compartiments 8, lorsque la phase d'absorption et d'apporter de la chaleur lors de la phase de désorption.

L'échangeur thermique est formé dans les conduits 26 et permet de faire circuler le caloporteur au sein de la structure interne 4 et au plus près du matériau de stockage de l'hydrogène. De manière particulièrement avantageuse, le fluide circule directement dans les conduits 26 et est donc directement en contact avec la surface extérieure des compartiments 8, ce qui rend l'extraction et l'apport de la chaleur très efficaces.

En variante, on peut envisager de disposer des tuyaux dans lesquels circulent le caloporteur dans les conduits 26. Dans ce cas, la connexion au système d'alimentation en caloporteur est simplifiée.

De manière avantageuse, les canaux sont réalisés dans un matériau présentant un bon coefficient d'échange thermique, comme l'aluminium ou le cuivre, assurant un bon échange entre le caloporteur et le matériau de stockage de l'hydrogène. Ces matériaux présentent en outre l'avantage d'être de mise en forme aisée. De préférence, le matériau des parois latérales et du fons est en matériau non poreux.

La structure interne peut être réalisée à partir de sous-ensembles de structures différentes.

Sur la figure 2, on peut voir un premier exemple de réalisation d'un sous-ensemble 28 de la structure interne 4 d'un réservoir selon la présente invention. Dans cet exemple de réalisation, les sous-ensembles 28 sont tels qu'ils rendent parfaitement étanche et indépendant en pression l'intérieur des compartiments du reste du réservoir.

Dans cet exemple, les canaux 10 sont réalisés individuellement, par exemple à partir de tube coupés selon un plan passant par leur axe, ce qui permet de réaliser deux canaux simultanément. Les cloisons transversales 18 sont ensuite fixées dans les canaux par exemple par soudage ou par brasage. Il est également possible d'utiliser une tôle pliée dont « les plis » sont soudés ou brasés à une plaque plane supérieure.

Comme indiqué précédemment, on peut également prévoir de pré-assembler les cloisons transversales 18 sur un tube poreux, ou sur des tiges et de placer cet assemblage dans les canaux.

Les canaux sont ensuite fixés les uns aux autres par leurs parois latérales par exemple par soudage ou brasage, de manière à former une structure unique.

Le matériau de stockage de l'hydrogène, qui peut se trouver sous forme de poudre ou d'un bloc solide est ensuite disposé dans chacun des compartiments.

Une bride (non représentée) est ensuite fixée par soudage ou brasage aux extrémités des tubes sous atmosphère contrôlée, de sorte à fermer de manière étanche les extrémités longitudinales des canaux.

La plaque est ensuite fixée de manière étanche sur les canaux, au niveau des extrémités supérieures des parois latérales, par exemple par soudage ou brasage.

Il est à noter que ces étapes ont lieu de préférence en boîte à gant puisque le matériau de stockage de l'hydrogène est très sensible aux atmosphères oxydantes.

Les sous-ensembles étanches ainsi réalisés sont ensuite empilés jusqu'à atteindre le nombre d'étages requis.

Les étages peuvent être solidarisés les uns au autres ou pas

S'ils ne sont pas solidarisés les uns aux autres, l'alimentation de chaque étage en hydrogène est avantageusement souple (flexible), limitant les risques de fuites lors de déplacement d'un sous-ensemble par rapport à un autre.

Si les étages sont maintenus immobiles les uns par rapport aux autres, le circuit d'alimentation peut être rigide, ce qui simplifie sa réalisation.

On réalise ensuite la connexion des différents canaux 10 au circuit d'hydrogène.

Dans l'exemple de la figure 1, le réservoir a une section circulaire, les sous-ensembles ont alors une taille variable suivant l'étage qu'ils forment. Dans le cas d'un réservoir à section carrée, les sous-ensembles sont identiques.

Ces sous-ensembles 28 présentent l'avantage d'être facilement manipulables car le matériau de stockage de l'hydrogène est enfermé de manière étanche dans les canaux.

Dans cet exemple de réalisation, on peut prévoir que la structure interne 4 ainsi assemblée soit disposée dans une enveloppe type « boîte à eau », la structure interne 4 baignant dans le fluide caloporteur, et un circuit d'hydrogène est connecté aux canaux. L'enveloppe résiste à la pression du fluide caloporteur, la résistance à la pression d'hydrogène étant assurée par les compartiments eux-mêmes.

Le fluide caloporteur remplit alors les conduits 26. L'échangeur thermique comporte un dispositif pour mettre ce fluide en mouvement de manière à améliorer l'extraction et l'apport de la chaleur, tel qu'une pompe.

Cet ensemble est ensuite disposé dans l'enceinte 2 qui forme la boite à eau.

L'échangeur thermique est donc réalisé de manière relativement simple.

Cet exemple de réalisation de l'échangeur thermique n'est en aucun cas limitatif et l'on pourrait prévoir de réaliser une connexion étanche au niveau de chacun des conduits 26 à un système de circulation du fluide caloporteur.

Sur la figure 5, on peut voir un autre exemple de réalisation de sous-ensembles 30 pour réaliser la structure interne de la figure 1. Dans cet exemple, les canaux sont réalisés d'un seul tenant à partir d'une tôle pliée en une succession de gouttières, formant les canaux comme représenté sur la figure 5. Les sous-ensembles sont réalisés de sorte à rendre étanche et indépendant en pression les conduits 26 de circulation du fluide caloporteur du reste du réservoir.

Ensuite, le fond de chaque gouttière est fixé sur une plaque plane, par exemple par soudage ou brasage.

On obture ensuite de manière étanche les conduits 26 de circulation du fluide caloporteur par exemple aux moyen de brides fixées par soudage ou brasage.

Les cloisons 18 sont ensuite montées dans les canaux comme expliqué précédemment, et le matériau de stockage de l'hydrogène 6 est disposé sous forme de poudre ou de blocs dans chacun de compartiments.

Les sous-ensembles 30 sont ensuite empilés jusqu'à atteindre le nombre d'étages requis.

Les étages sont, par exemple rendus solidaires les uns des autres au moyen des brides de connexion avec le circuit de fluide caloporteur.

La structure interne ainsi assemblée peut alors être placée dans l'enceinte 2 apte à tenir la pression de gaz et est remplie d'une atmosphère d'hydrogène. Les conduits 26 sont alors prévus pour résister à la différence de pression entre le fluide caloporteur et l'hydrogène. Le circuit de l'échangeur thermique est connecté aux conduits 26 de circulation du fluide, à travers les brides.

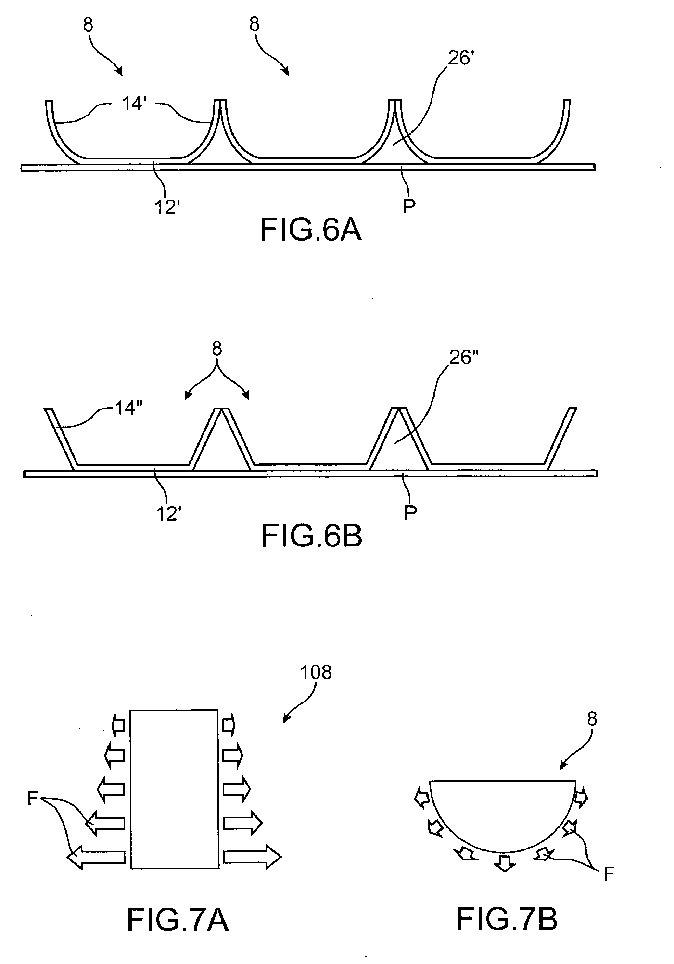

Sur les figures 6A et 6B, on peut voir des variantes de réalisation des compartiments selon la présente invention

Sur la figure 6A, les compartiments comportent un fond plat 12' et deux parois latérales concaves 14', l'angle entre les tangentes t₁₄, et le fond 12' est strictement supérieur à 90°.

Sur la figure 6B, les compartiments comportent un fond plat 12" et deux parois latérales 14" planes inclinées et s'éloignant l'une de l'autre formant une ouverture évasée, l'angle entre les parois 14" et le fond 12" est strictement supérieur à 90°.

Ces compartiments présentent l'avantage d'augmenter la densité volumique du matériau de stockage. En effet, le volume des conduits 26', 26" entre les compartiments étant réduit, le volume des compartiments en est augmenté, permettant d'augmenter la quantité de matériau de stockage de l'hydrogène. Il est à noter que le refroidissement obtenu par ces conduits 26' de taille réduite est néanmoins suffisant pour une grande majorité de conditions de fonctionnement des réservoirs à base d'hydrures.

A titre d'exemple, le matériau disposé dans les compartiments peut être composé de un ou plusieurs matériaux utilisés pour le stockage de l'hydrogène. Ces matériaux de stockage d'hydrogène peuvent être choisis à partir des différentes familles telles que AB, A₂B, A₂B₇, AB₂ ou AB₅ ou être un mélange de ces familles de matériaux.

Les hydrures métalliques réversibles de formule AₘBₙ sont constitués d'un élément A formant un hydrure stable tel que les métaux alcalins ou alcalino-terreux comme le lithium, le calcium ou le magnésium, les métaux de transition de quatrième ou cinquième colonne comme le zirconium, le titane, ou enfin les terres rares métalliques comme le lanthane, le cérium et d'un élément B formant un hydrure instable dans les conditions standards de température et de pression, tel que la plupart des métaux de transition comme le chrome, le cobalt, le nickel ou le fer.

Ces matériaux peuvent avoir une structure cubique centrée (cc), une structure cubique à faces centrées (cfc) ou une structure cristallographique de type C-14 ou C-15.

Par exemple, ces matériaux peuvent être Mg, Mg-Ni, Mg-Cu, Ti-Fe, Ti-Mn, Ti-Ni, Ti-V, Mn-Ni, Ti-V-Cr, Ti-V-Fe. Les capacités d'absorption de l'hydrogène en fonction des pressions et des températures utilisées varient suivant les matériaux de stockage d'hydrogène.

D'autres matériaux absorbant l'hydrogène comme les hydrures chimiques complexes avec des éléments légers tels que les alanates (NaAlH4), les hydrures à base de Li et de B tels que LiBH4, NaBH4, ou alors des imides ou des amides, peuvent aussi être utilisés dans la géométrie décrite dans la présente invention.

Nous allons maintenant expliquer le fonctionnement de ce réservoir.

Lorsque l'on veut charger le réservoir en hydrogène, on fait circuler de l'hydrogène dans le réservoir, par exemple dans les tuyaux poreux. La réaction d'absorption étant exothermique, de la chaleur est dégagée. On évacue la chaleur simultanément en faisant circuler un caloporteur froid dans les conduits 26 qui est en contact avec la surface extérieure des compartiments. Plus la chaleur est évacuée rapidement et efficacement, plus le chargement du réservoir est rapide. Le matériau chargé en hydrogène forme alors un hydrure métallique. Comme déjà expliqué le matériau gonfle du fait de l'absorption et décrépite, pour former de la poudre.

Lorsque l'on souhaite disposer de l'hydrogène contenu dans le réservoir, on abaisse la pression d'hydrogène dans le réservoir ou bien on chauffe l'hydrure via les conduits 26 de l'échangeur thermique. L'hydrogène est désorbé. L'hydrogène ainsi libéré circule d'un compartiment à un autre à l'autre via les encoches faites dans la partie supérieure des cloisons 18 et est collectée à une extrémité longitudinale du réservoir.

La température de chargement et de déchargement du réservoir varie par exemple de -20°C à 400 °C. La pression de chargement varie par exemple de 0,1 bar à 200 bars H₂, et la pression de déchargement varie par exemple de 100 bars à 0 bar (absolus).

Grâce à la présente invention, et au choix particulier de la forme des compartiments, la poudre d'hydrure peut occuper entre 40 et 60 % du volume total d'un réservoir, on obtient ainsi une densité volumique de stockage satisfaisante. Il est possible d'augmenter davantage la densité de stockage en utilisant des compartiments présentant un fond plat comme ceux représentés sur les figures 6A et 6B, ce qui permet de d'augmenter le volume de stockage des compartiments 8.

Par ailleurs, la forme hémicylindrique, et plus généralement la forme évasée des compartiments 8 permet d'éviter l'accumulation de contraintes F au fond des compartiments comme cela est schématisé sur la figure 7A alors que dans le cas d'un compartiment à section rectangulaire 108, cette concentration de contraintes F apparaît (figure 7B). En effet, le volume de poudre au fond de la cellule est le plus dense et susceptible d'exercer le plus de contraintes sur les parois. Or la forme très évasée du fond du compartiment permet à la poudre d'être quasiment libre de se dilater. Les contraintes exercées sur la paroi sont régulières et de faible amplitude.

Alors que, lorsqu'un lit de poudre est confiné dans un compartiment rectangulaire, les parois étant verticales sur toute leur hauteur, les contraintes exercées sur la paroi sont faibles dans la partie haute : les frottements sont moindres et la poudre est plus libre de se dilater, par contre elles sont très élevées dans le fond du compartiment où le matériau se retrouve confiné par l'effet des forces de frottement sur les parois latérales en partie haute du compartiment.

Dans l'exemple de compartiment selon l'invention de la figure 7A, les parois en haut de la cellule hémisphérique sont certes verticales, mais de la même façon, les poudres en haut de la cellule ne sont susceptibles d'exercer que de faibles contraintes, ce qui n'est pas pénalisant.

De plus, grâce au procédé de fabrication de la structure interne, le matériau est mis en place individuellement dans chaque compartiments, ce qui permet d'assurer à la fabrication une bonne répartition de celui qui est maintenu grâce notamment aux cloisons transversales 18. Ces cloisons transversales 18 empêchent les mouvements de la poudre à grande échelle dans le réservoir, ce qui rend le réservoir selon la présente invention utilisable dans des applications embarquées ou mobiles.

L'invention assure également un transfert efficace de la chaleur de réaction du lit d'hydrure au fluide caloporteur. En effet, la surface de contact entre le fluide et les compartiments est grande, ce qui autorise l'emploi de fluide ayant un coefficient d'échange faible sans nuire aux performances en termes de débits d'absorption et de désorption d'hydrogène. Le rayon des canaux contrôle les débits maximum d'hydrogène absorbé ou désorbé : le rayon est aussi la longueur caractéristique de diffusion thermique du réservoir. Plus cette distance est faible et plus le transfert de la chaleur de réaction sera rapide.

Par exemple, le rayon est compris entre 1 cm et 5 cm, et avantageusement égal à 2 cm. La longueur des compartiments est environ égale à 2 fois le rayon. Les dimensions du réservoir en largeur, longueur et hauteur sont comprises par exemple entre 5 fois le rayon et 100 fois le rayon des demi-tubes

Le réservoir selon la présentation invention peut être appliqué dans l'ensemble des applications mettant en oeuvre un stockage de l'hydrogène, à la fois, dans les domaines mettant en oeuvre un stockage de grandes quantités et ceux nécessitant des stockages de petites quantités.

Par exemple, il peut être utilisé comme réservoir pour les moyens de locomotion, comme les bateaux, les sous-marins tels que les voitures particulières, les autobus, les camions, engins de chantier ou agricoles, les véhicules à deux roues.

Il peut également être utilisé dans les alimentations pour les dispositifs portables tels que les appareils électroniques portables (téléphone portable, ordinateurs portables, ...).

Il peut aussi être appliqué aux systèmes de stockage en plus grosse quantité, telle que pour des groupes électrogènes, pour le stockage de l'hydrogène produit en grande quantité grâce à l'énergie des éoliennes, des panneaux photovoltaïques, ou de la géothermie.

## Revendications

1. Réservoir de stockage de l'hydrogène par absorption dans un matériau de stockage de l'hydrogène, ledit réservoir ayant un axe longitudinal (X) et comportant une enceinte (2) et une structure interne (4) disposée dans l'enceinte (2), la structure interne (4) comportant une pluralité d'étages (E1, E2, ...En) et un système d'échange thermique au sein de la structure interne (4), chaque étage (E1, E2, ...En) comportant une pluralité de compartiments (8) répartis en une pluralité de rangées orientées selon la direction longitudinale, chaque compartiment comportant un fond (12, 12', 12"), deux parois latérales (14, 14', 14"), deux parois transversales (18) et une ouverture, le fond étant destiné à être disposé en dessous de l'ouverture, deux compartiments adjacents d'une même rangée ayant une cloison transversale (18) en commun, deux compartiments (8) de deux rangées adjacentes étant solidarisés par leurs parois latérales, des plaques (P) étant disposées entre deux étage successifs, formant pour l'étage supérieur un support et pour l'étage inférieur un couvercle, lesdites plaques (P) étant destinées à être sensiblement horizontales, l'ouverture de chaque compartiment (8) présentant une dimension transversale supérieure à celle du fond dudit compartiment et l'angle formé entre chacune des parois latérales (14, 14', 14") et le fond (10, 10', 10") étant strictement supérieur à 90°, chaque compartiment (8) contenant un matériau de stockage de l'hydrogène, dans lequel les volumes définis entre deux parois latérales (14, 14', 14") de deux rangées de compartiments adjacentes et la plaque (P) formant support forment des conduits (26, 26') d'écoulement d'un caloporteur.

2. Réservoir selon la revendication 1, dans lequel le caloporteur s'écoule directement dans les conduits (26, 26') entrant en contact aves les parois latérales (14, 14', 14").

3. Réservoir selon la revendication 1 ou 2, dans lequel chaque compartiment (8) a une forme hémicylindrique, le cylindre dont est issu le compartiment ayant une section circulaire.

4. Réservoir selon la revendication 1 ou 2, dans lequel chaque compartiment (8) comporte un fond plat (12', 12") et des parois latérales (14', 14") concaves ou planes.

5. Réservoir selon l'une des revendications précédentes, dans lequel les parois latérales (14, 14', 14") sont sécantes avec le plan de la plaque (P) formant couvercle.

6. Réservoir selon l'une des revendications précédentes, dans lequel les parois latérales des compartiments (8) d'une rangée sont réalisées d'un seul tenant.

7. Réservoir selon l'une des revendications 1 à 6, comportant des sous-ensembles (30) formés d'une pluralité de compartiments d'un étage, lesdits compartiments (8) étant solidaires de la plaque formant support, lesdits sous-ensembles (30) étant empilés pour former la structure interne.

8. Réservoir selon la revendication précédente, dans lequel chaque conduit (26) est raccordé de manière étanche au circuit de caloporteur.

9. Réservoir selon l'une des revendications 1 à 6, comportant des sous-ensembles (28) formés d'une pluralité de compartiment d'un étage, lesdits compartiments (8) étant solidaires de la plaque (P) formant couvercle, lesdits sous-ensembles (28) étant empilés pour former la structure interne.

10. Réservoir selon la revendication précédente, dans lequel le couvercle (P) ferme de manière étanche les compartiments (8), la structure interne étant disposée dans un bain de caloporteur.

11. Réservoir selon l'une des revendications 1 à 10, dans lequel les parois transversales (18) comportent au moins un orifice pour permettre le passage de l'hydrogène d'un compartiment à l'autre d'un même canal.

12. Réservoir selon l'une des revendications 1 à 10, dans lequel un tube poreux traverse les compartiments (8) d'une même rangée pour alimenter lesdits compartiments (8) en hydrogène, avantageusement le tube est au fond des compartiments (8) et sensiblement dans leur plan de symétrie.

13. Réservoir selon l'une des revendications 1 à 12, dans lequel les compartiments (8) sont réalisés en un matériau offrant un bon coefficient d'échange thermique, tel que l'aluminium ou le cuivre.

14. Réservoir selon l'une des revendications précédentes, dans lequel le matériau de stockage d'hydrogène est constitué d'au moins un matériau du type AₘBₙ constitué d'un élément A formant un hydrure stable tel que les métaux alcalins ou alcalino-terreux comme le lithium, le calcium ou le magnésium, les métaux de transition de quatrième ou cinquième colonne comme le zirconium, le titane, ou les terres rares métalliques comme le lanthane, le cérium et d'un élément B formant un hydrure instable dans les conditions standards, tel que la plupart des métaux de transition comme le chrome, le cobalt, le nickel ou le fer.

15. Procédé de réalisation d'un réservoir selon l'une des revendications 1 à 14, comportant les étapes :
a) de réalisation de canaux (10) ayant une section transversale identique à celles des compartiments (8),
b) de fixation des cloisons transversales (18) dans les canaux délimitant les compartiments,
c) de solidarisation d'une plaque (P) auxdits canaux (10),
d) de mise en place du matériau de stockage de l'hydrogène (6) individuellement dans chaque compartiment (8),
e) de répétition des étapes a), b) etc.) jusqu'à obtention du nombre de sous-ensembles (28, 30) requis,
f) d'empilement desdits sous-ensembles (28, 30),
g) de mise en place de l'empilement dans une enceinte,
h) d'alimentation en hydrogène.

16. Procédé de réalisation d'un réservoir selon la revendication 15, dans lequel les canaux (10) sont réalisés par pliage d'une tôle

17. Procédé de réalisation d'un réservoir selon la revendication 15 ou 16, dans lequel l'étape c) a lieu avant l'étape b) et dans lequel la plaque (P) obture de manière étanche les canaux (10), formant couvercle.

18. Procédé de réalisation d'un réservoir selon la revendication 15 ou 16, dans lequel lors de l'étape b), la plaque (P) est solidarisée aux fonds des canaux (10), formant le couvercle de l'étage inférieur.

## Patentansprüche

1. Behälter zur Speicherung von Wasserstoff mittels Absorption in einem Material zur Wasserstoffspeicherung, wobei der Behälter eine longitudinale Achse (X) aufweist und eine Hülle (2) sowie eine in der Hülle (2) angeordnete Innenstruktur (4) umfasst, wobei die Innenstruktur (4) eine Mehrzahl von Stufen (E1, E2,...En) sowie ein Wärmetauschersystem innerhalb der Innenstruktur (4) umfasst, wobei jede Stufe (E1, E2,...En) eine Mehrzahl von Fächern (8) umfasst, die in einer Mehrzahl von Reihen verteilt sind, welche entlang der longitudinalen Richtung orientiert sind, wobei jedes Fach einen Boden (12, 12', 12"), zwei laterale Wände (14, 14', 14"), zwei transversale Wände (18) sowie eine Öffnung umfasst, wobei der Boden dazu ausgelegt ist, unter der Öffnung angeordnet zu sein, wobei zwei benachbarte Fächer ein und derselben Reihe eine Trennwand (18) gemeinsam haben, wobei zwei Fächer (8) von zwei benachbarten Reihen durch ihre lateralen Wände miteinander verbunden sind, wobei Platten (P) zwischen zwei aufeinanderfolgenden Stufen angeordnet sind, die für die obere Stufe einen Träger und für die untere Stufe einen Deckel bilden, wobei die Platten (P) dazu ausgelegt sind, im Wesentlichen horizontal zu sein, wobei die Öffnung jedes Fachs (8) eine transversale Abmessung aufweist, die größer ist als jene des Bodens des Fachs, und wobei der Winkel, der zwischen jeder der lateralen Wände (14, 14', 14") und dem Boden (10, 10', 10") gebildet ist, streng größer als 90° ist, wobei jedes Fach (8) ein Material zur Wasserstoffspeicherung enthält, wobei die Volumina, die definiert sind zwischen zwei lateralen Wänden (14, 14', 14") von zwei benachbarten Reihen von Fächern und der Platte (P) die einen Träger bildet, Strömungsleitungen (26, 26') für einen Wärmeträger bilden.

2. Behälter nach Anspruch 1, bei dem der Wärmeträger direkt in den Leitungen (26, 26') strömt und in Kontakt mit den lateralen Wänden (14, 14', 14") tritt.

3. Behälter nach Anspruch 1 oder 2, bei dem jedes Fach (8) eine halbzylindrische Form hat, wobei der Zylinder, aus dem das Fach hervorgegangen ist, einen kreisförmigen Querschnitt hat.

4. Behälter nach Anspruch 1 oder 2, bei dem jedes Fach (8) einen flachen Boden (12', 12") und konkave oder ebene laterale Wände (14', 14") umfasst.

5. Behälter nach einem der vorhergehenden Ansprüche, bei dem die lateralen Wände (14, 14', 14") Sekanten für die Ebene der Platte (P) sind, die den Deckel bildet.

6. Behälter nach einem der vorhergehenden Ansprüche, bei dem die lateralen Wände der Fächer (8) einer Reihe einstückig hergestellt sind.

7. Behälter nach einem der Ansprüche 1 bis 6, umfassend Untergruppen (30), die aus einer Mehrzahl von Fächern einer Stufe gebildet sind, wobei die Fächer (8) mit der Platte verbunden sind, die einen Träger bildet, wobei die Untergruppen (30) gestapelt sind, um die Innenstruktur zu bilden.

8. Behälter nach dem vorhergehenden Anspruch, bei dem jede Leitung (26) in dichter Weise an den Wärmeträgerkreis angeschlossen ist.

9. Behälter nach einem der Ansprüche 1 bis 6, umfassend Untergruppen (28), die aus einer Mehrzahl von Fächern einer Stufe gebildet sind, wobei die Fächer (8) mit der Platte (P) verbunden sind, die einen Deckel bildet, wobei die Untergruppen (28) gestapelt sind, um die Innenstruktur zu bilden.

10. Behälter nach dem vorhergehenden Anspruch, bei dem der Deckel (P) die Fächer (8) in dichter Weise schließt, wobei die Innenstruktur in einem Wärmeträgerbad angeordnet ist.

11. Behälter nach einem der Ansprüche 1 bis 10, bei dem die transversalen Wände (18) wenigstens eine Öffnung umfassen, um den Durchtritt des Wasserstoffs eines Fachs zum anderen ein und desselben Kanals zu ermöglichen.

12. Behälter nach einem der Ansprüche 1 bis 10, bei dem ein poröses Rohr die Fächer (8) ein und derselben Reihe durchläuft, um die Fächer (8) mit Wasserstoff zu versorgen, wobei das Rohr vorzugsweise am Boden der Fächer (8) und im Wesentlichen in ihrer Symmetrieebene angeordnet ist.

13. Behälter nach einem der Ansprüche 1 bis 12, bei dem die Fächer (8) aus einem Material hergestellt sind, das einen guten Wärmeaustauschkoeffizienten bietet, beispielsweise Aluminium oder Kupfer.

14. Behälter nach einem der vorhergehenden Ansprüche, bei dem das Material zur Wasserstoffspeicherung gebildet ist durch wenigstens ein Material vom Typ AₘBₙ, gebildet durch ein Element A, das ein stabiles Hydrid bildet, beispielsweise die Alkalimetalle oder die Erdalkalimetalle wie zum Beispiel Lithium, Calcium oder Magnesium, die Übergangsmetalle der vierten oder fünften Spalte wie zum Beispiel Zirkon, Titan, oder die metallischen seltenen Erden wie zum Beispiel Lanthan, Cer, sowie ein Element B, welches bei Standardbedingungen ein instabiles Hydrid bildet, beispielsweise die Mehrzahl der Übergangsmetalle wie zum Beispiel Chrom, Cobalt, Nickel oder Eisen.

15. Verfahren zur Herstellung eines Behälters nach einem der Ansprüche 1 bis 14, umfassend die Schritte:
a) Herstellen von Kanälen (10) mit einem Querschnitt identisch zu jenem der Fächer (8),
b) Befestigen der transversalen Trennwände (18) in den Kanälen zur Begrenzung der Fächer,
c) Verbinden einer Platte (P) mit den Kanälen (10),
d) Platzieren von Material zur Wasserstoffspeicherung (6) einzeln in jedem Fach (8),
e) Wiederholen der Schritte a), b) etc., bis man die benötigte Zahl von Untergruppen (28, 30) erhält,
f) Stapeln der Untergruppen (28, 30),
g) Platzieren des Stapels in einer Hülle,
h) Versorgen mit Wasserstoff.

16. Verfahren zur Herstellung eines Behälters nach Anspruch 15, bei dem die Kanäle (10) durch Falten eines Blechs hergestellt sind.

17. Verfahren zur Herstellung eines Behälters nach Anspruch 15 oder 16, bei dem der Schritt c) vor dem Schritt b) erfolgt und bei dem die Platte (P) in dichter Weise die Kanäle (10) zur Bildung eines Deckels verschließt.

18. Verfahren zur Herstellung eines Behälters nach Anspruch 15 oder 16, bei dem während des Schritts b) die Platte (P) mit den Böden der Kanäle (10) zur Bildung des Deckels der unteren Stufe verbunden wird.

## Claims

1. A hydrogen storage tank by absorption into a hydrogen storage material, said tank having a longitudinal axis (X) and comprising an enclosure (2) and an inner structure (4) provided within the enclosure (2), the inner structure (4) comprising a plurality of stages (E1, E2, ...En) and a heat exchange system within the inner structure (4), each stage (E1, E2, ...En) comprising a plurality of compartments (8) distributed into a plurality of rows directed along the longitudinal direction, each compartment comprising a bottom (12, 12', 12"), two side walls (14, 14', 14"), two transverse walls (18) and an opening, the bottom being intended to be provided under the opening, two adjacent compartments of a same row having a common transverse partition wall (18), two compartments (8) of two adjacent rows being made integral through their side walls, plates (P) being provided between two successive stages, forming for the upper stage a support and for the lower stage a cover, said plates (P) being intended to be substantially horizontal, the opening of each compartment (8) having a higher transverse direction than that of the bottom of said compartment and the angle formed between each of side walls (14, 14', 14") and the bottom (10, 10', 10") being strictly higher than 90°, each compartment (8) containing a hydrogen storage material, wherein the volumes defined between two side walls (14, 14', 14") of two rows of adjacent compartments and the support plate (P) form heat transfer fluid flow ducts (26, 26').

2. The tank according to claim 1, wherein the heat transfer fluid directly flows in the ducts (26, 26') contacting the side walls (14, 14', 14").

3. The tank according to claim 1 or 2, wherein each compartment (8) has a semi-cylindrical shape, wherein the cylinder from which the compartment comes has a circular cross-section.

4. The tank according to claim 1 or 2, wherein each compartment (8) has a flat bottom (12', 12") and concave or planar side walls (14', 14").

5. The tank according to one of the preceding claims, wherein the side walls (14, 14', 14") are intersecting the plane of the cover plate (P).

6. The tank according to one of the preceding claims, wherein the side walls of the compartment (8) of a row are made as a single piece.

7. The tank according to one of claims 1 to 6, comprising subassemblies (30) formed by a plurality of compartments of a stage, said compartments (8) being integral to the support plate, said subassemblies (30) being stacked to form the inner structure.

8. The tank according to the preceding claim, wherein each duct (26) is tightly connected to the heat transfer fluid circuit.

9. The tank according to one of claims 1 to 6, comprising subassemblies (28) formed by a plurality of compartments of a stage, said compartments (8) being integral to the cover plate (P), said subassemblies (28) being stacked to form the inner structure.

10. The tank according to the preceding claim, wherein the cover (P) tightly closes the compartments (8), the inner structure being provided in a heat transfer fluid bath.

11. The tank according to one of claims 1 to 10, wherein the transverse walls (18) comprise at least one port to enable hydrogen to pass from one compartment to the other of a same channel.

12. The tank according to one of claims 1 to 10, wherein a porous tube passes through the compartments (8) of a same row to feed hydrogen to said compartments (8),the tube being advantageously at the bottom of the compartments (8) and substantially in their plane of symmetry.

13. The tank according to one of claims 1 to 12, wherein the compartments (8) are made of a material providing a good heat exchange coefficient, such as aluminium or copper.

14. The tank according to one of the preceding claims, wherein the hydrogen storage material consists of at least one AₘBₙ type material consisting of an element A forming a stable hydride such as alkaline or alkaline earth metals like lithium, calcium or magnesium, fourth or fifth column transition metals like zirconium, titanium or metal rare earth like lanthanum, cerium and of an element B forming an instable hydride under standard conditions, such as most transition metals like chromium, cobalt, nickel or iron.

15. A method for making a tank according to one of claims 1 to 14, comprising the steps of:
a) making channels (10) having a transverse cross-section identical to those of the compartments (8),
b) attaching transverse partition walls (18) in the channels bounding the compartments,
c) making a plate (P) integral to said channels (10),
d) placing the hydrogen storage material (6) individually into each compartment (8),
e) repeating steps a), b) etc.) until the required number of subassemblies (28, 30) is obtained,
f) stacking said subassemblies (28, 30),
g) placing the stack into an enclosure,
h) feeding hydrogen.

16. The method for making a tank according to claim 15, wherein the channels (10) are made by folding a metal sheet.

17. The method for making a tank according to claim 15 or 16, wherein step c) occurs before step b) and wherein the plate (P) tightly seals the cover channels (10).

18. The method for making a tank according to the claim 15 or 16, wherein the ducts (26, 26') bounded between the channels (10) and the cover (P) of the lower stage are tightly connected to the heat exchange system.
